# EUROPÄISCHE PATENTSCHRIFT

(11) **EP 0 938 761 B1**
(45) Veröffentlichungstag und Bekanntmachung des Hinweises auf die Patenterteilung: **19.09.2001**
(21) Anmeldenummer: 97950144.2
(22) Anmeldetag: 07.11.1997
(51) Int. Cl.: H01S 3/02, H01S 3/109, H01S 3/0941

(54) **DIODENGEPUMPTER, FREQUENZVERDOPPELTER FESTKÖRPERLASER**
DIODE-PUMPED FREQUENCY DOUBLED SOLID STATE LASER
LASER SOLIDE A FREQUENCE DOUBLEE ET A POMPAGE PAR DIODE

(30) Priorität: 08.11.1996 DE 19646072
(43) Veröffentlichungstag der Anmeldung: 01.09.1999
(73) Patentinhaber: EADS Deutschland GmbH, 81663 München (DE)
(72) Erfinder: SCHMITT, Nikolaus, D-80797 München (DE); TOESKO, Günter, D-96317 Kronach (DE); REITHMEIER, Günter, D-85640 Putzbrunn (DE); SCHALK, Josef, D-84051 Altheim (DE)
(74) Vertreter: Baum, Wolfgang, Dipl.-Ing.
(86) Internationale Anmeldenummer: EP9706206
(87) Internationale Veröffentlichungsnummer: WO9821787

(56) Entgegenhaltungen:
- EP-A- 0 251 718
- EP-A- 0 508 406
- EP-A- 0 651 475
- JP-A- 8 236 848
- US-A- 4 665 529
- US-A- 4 977 566
- US-A- 5 130 996
- US-A- 5 446 750
- US-A- 5 506 854

## Beschreibung

Die Erfindung betrifft einen diodengepumpten, frequenzverdoppelten Festkörperlaser.

Festkörperlaser, die meist unter Verwendung von Seltenerd-dotierten Kristallen oder Gläsern, beispielsweise Nd:YAG, Nd:YVO₄, Nd:YAlO, Nd:YLF, Nd:Glas oder anderen, ähnlichen Festkörpermaterialien aufgebaut sind und mit resonatorinterner Frequenzverdopplung ausgestattet sind, sind seit langem bekannt und werden in vielen Anwendungen der Lasertechnik eingesetzt. Man bedient sich hierbei der Erzeugung der zweiten oder höherer harmonischer Schwingungen in Materialien, vorwiegend Kristallen, welche kein Inversionszentrum besitzen - beispielsweise KTP, LBO, BBO, KNbO₃, LiNbO₃ oder andere - mit einem hohen nichtlinearen Koeffizienten, welcher durch anharmonische Schwingungen der Gitteratome, angeregt durch eine einfallende Lichtwelle, Licht der doppelten oder vielfachen Frequenz der eingestrahlten Lichtwelle erzeugt. Der Prozess der Erzeugung höherer Harmonischer ist stark leistungsdichteabhängig (vergl. z. B. Köchner, Solid-State Laser Engineering), so dass zur Erzeugung frequenzverdoppelter Laserstrahlung hoher Effizienz der nichtlineare Kristall üblicherweise zumindest bei kontinuierlich arbeitenden (cw) Lasern in den Resonator des Lasers selbst eingebracht wird (s.o. oder auch z.B. Yariv, Quantum Electronics, 3. Aufl. S. 402). Die Resonatorspiegel werden meist hochreflektierend für die Laserwellenlänge gewählt, um eine maximale Leistungsüberhöhung im Resonator und damit eine möglichst hohe Verdopplungseffizienz zu erreichen. Der Auskoppelspiegel ist gleichzeitig hochtransmittant für die frequenzverdoppelte Strahlung, um diese gut aus dem Resonator auskoppeln zu können..

Zumeist werden derartige Laser auf optischen Bänken aufgebaut, das heisst, dass die Elemente zur Aufnahme von Laserkristall, Frequenzverdoppler und Auskoppelspiegel meist auf der Unterseite mit einer Platte fest verschraubt oder mittels verschiebbarer Konstruktionen entlang einer Schiene aufgereiht werden. Diese Konstruktion erweist sich jedoch gerade im Falle resonatorinterner Frequenzverdopplung, bei der eine besonders geringe Justagetoleranz aufgrund der leistungsdichteabhängigen Konversionseffizienz erforderlich ist, nicht hinreichend langzeitstabil bei sich ändernden Umweltbedingungen oder lange Betriebsdauer. Insbesondere Verbiegungen der optischen Bank oder Schiene sowie Verkippung der nur einseitig befestigten Halteelemente sind hierfür verantwortlich zu machen.

Eine bekannte alternative Bauform sieht die Befestigung der Halteelemente an drei oder vier Stahlstangen vor, welche typischerweise in den Ecken der meist rechteckigen Halteelemente durch entsprechende Öffnungen durchgeschoben werden, wobei die Halte- und Justageelemente durch Klemmungen an den Stangen fixiert werden. Hier kann zwar keine nennenswerte Verkippung der Halteelemente zueinander mehr auftreten, allerdings zeigte die Praxis, dass bei der Klemmung der Halteelemente an die Stangen Spannungen auf die Stangen ausgeübt werden, welche ebenfalls zu langzeitigen Dejustagen der Elemente zueinander führt. Darüber hinaus ist kein guter Wärmetransport von Haltern möglich, die mit Wärme beispielsweise aus dem Laserkristall oder dem Frequenzverdoppler beaufschlagt sind, da die Stangen einen geringen Querschnitt und daher eine schlechte Leitfähigkeit aufweisen und zudem kein Kontakt zu einer grösseren, als Kühlkörper dienenden thermischen Masse möglich ist.

Wiederum eine andere Lösung nach dem Stande der Technik sieht die Montage der Resonatorelemente entweder in Schraubhülsen vor, wobei keine unabhängige Haltestruktur ausgebildet ist und die Stabilität eines Elementes von der Stabilität der umgebenden Elemente abhängt, oder in Rohren, was eine Herstellung der Resonators nur in bestimmter Reihenfolge und keine spätere Entnahme eines mittleren Resonatorelementes ermöglicht.

Eine weitere Möglichkeit der Halterung der Elemente eines Festkörper lasers ist in EP-A-0 251 718 offenbart.

Schliesslich können noch Halte- und Justageelemente statt auf einer Platte auch auf einem (dickeren) Rohr verschiebbar geklemmt werden, was die gleichen Nachteile bezüglich Verkippung und Wärmeableitung aufweist wie die herkömmlich optische Bank.

Es ist daher Aufgabe der Erfindung, eine Resonatorstruktur aufzuzeigen, welche spannungsfrei ist, keine interne Verwindung oder Verspannung durch die Halte- oder Justierelemente aufweist, einen guten Wärmetransport und Eigenschaften eines Kühlkörpers aufweist, sowie eine grosse Kontaktfläche zur Aufnahme thermisch belasteter Halteelemente vorsieht.

Dies wird durch die Kombination der in Anspruch 1 aufgeführten Merkmale erreicht. Einzelheiten der Erfindung ergeben sich aus den Unteransprüchen und der Beschreibung, in der anhand der Zeichnung mehrere Ausführungsbeispiele erörtert sind.

Es zeigen
- Fig. 1: eine Skizze der erfindungsgemässen Anordnung einer Resonatorstruktur mit eingebrachten Resonatorelementen,
- Fig. 2: eine perspektivische Skizze der erfindungsgemässen Resonatorstruktur ohne Resonatorelemente,
- Fig. 3: ein äusseres Lasergehäuse mit eingebrachter, staubgeschützter Resonatorstruktur als Subchassis,
- Fig. 4: eine Skizze der Auskoppeleinheit zur Leistungs- und Rauschmessung, und
- Fig. 5: eine erfindungsgemässe Anordnung einer zweidimensionalen Resonatoranordnung am Beispiel eines V-Resonators.

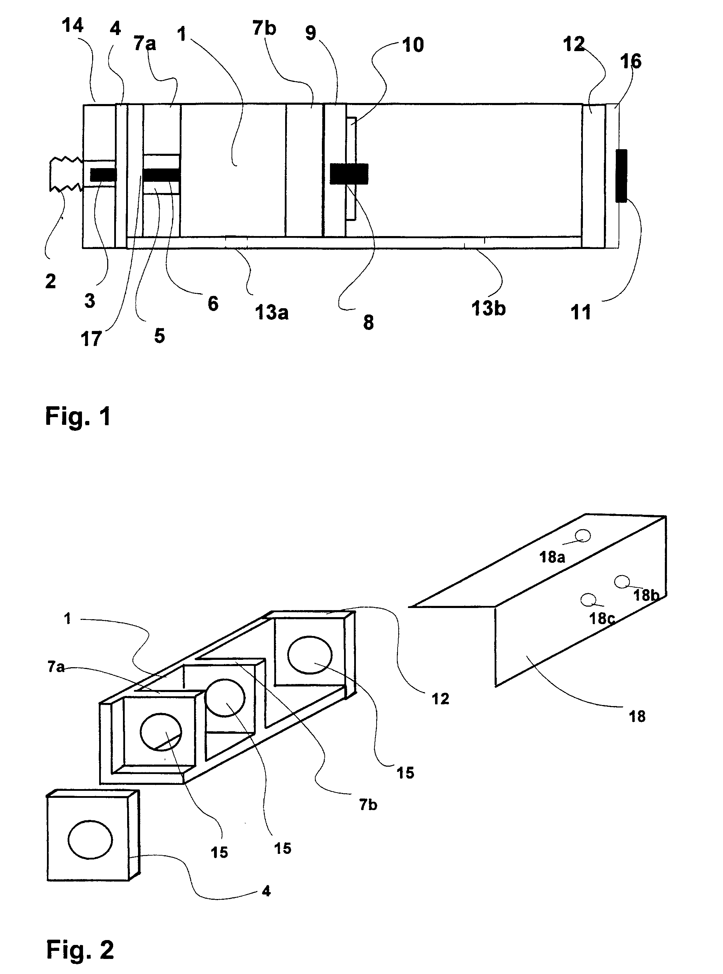

Die erfindungsgemässe Lösung sieht eine Konstruktion vor, welche aus einem Winkel- oder U-Profil besteht, welches entweder aus spannungsarmen Material, beispielsweise spannungsarmen Aluminium, aus einem Stück herausgearbeitet, beispielsweise gefräst oder als Gussteil spannungsfrei in einem Stück hergestellt ist. Dieses Winkel- oder U-Profil enthält weiterhin mindestens eine, vorzüglich jedoch mindestens zwei Zwischenwände, welche aus demselben Stücke sind und so dem Winkel eine zusätzliche Stabilität gegen Verwindung und Verspannung gibt. Eine solche Anordnung ist - immer auf den Fall eines Winkels bezogen - in den folgenden Abbildungen 1-5 dargestellt.

Figur 2 zeigt beispielsweise den Winkel (1) mit den Zwischenwänden (7a) und (7b), welche aus einem Stück gearbeitet sind. Die Zwischenwände (7a) und (7b) weisen Durchbrüche auf, die eine ungehinderte Ausbreitung der Resonatormode oder der Laserstrahlung entlang der Achse des Winkels ermöglichen. Vorder- und rückseitig können mit dem Winkel abschliessend entweder Wände ebenfalls aus dem gleichen Stücke oder, wie gezeichnet, verschraubte Platten (4) und (12) angebracht werden, welche dem Winkel weitere Stabilität verleihen.

An diese Halteplatten und Zwischenwände können nun flächig Halte- und Justierelemente angebracht werden, z. B. durch Verschraubungen. Hierdurch ist eine maximale Stabilität dieser Elemente zueinander gewährleistet wie auch eine gute Wärmeabführung eventueller Wärmequellen über den flächigen Kontakt mit der Zwischenwand. Auf diese Wiese dient der Winkel gleichzeitig als thermische Masse und Kühlkörper, wodurch die kühlbare thermische Last insbesondere durch die damit einhergehende Längenausdehnung und mögliche Dejustage der Elemente beschränkt ist, die bei dieser Anordnung jedoch minimiert ist.

Diese Anbringung der Resonatorelemente ist in Figur 1 verdeutlicht. In der ersten Zwischenwand (7) ist ein Laserkristall (6) eingebracht, welcher in einer Buchse (5) gehaltert ist. Das Material dieser Buchse ist so gewählt, dass die Temperatur des Laserkristalle optimal so ist, dass durch die induzierte thermische Linse eine Fokussierung der Resonatormode am Ort des Frequenzverdopplerkristalles (8) erfolgt und dadurch zu einer erhöhten Leistungsdichte, woraus eine höhere Frequenzkonversion erfolgt. Der Frequenzverdoppler (8) ist seinerseits in einer Halte- und Justagevorrichtung 9 aufgenommen, welche eine Justage senkrecht zur Strahlrichtung (diese ist eine Achse, welche durch alle optischen Elemente (6), (8) und (11) läuft) in zwei Richtungen sowie eine Verkippung in zwei Richtungen senkrecht zur Strahlachse sowie eine Drehung um die Strahlachse ermöglicht. Auf diese Weise kann sowohl der Phasenanpassungswinkel als auch die Polarisationsrichtung und die optische Senkrechtstellung des Kristalles erfolgen. Der Frequenzverdoppler kann zusätzlich über ein Peltierelement 10 geheizt oder gekühlt werden, wobei die Abwärme des Peltierelementes beispielsweise auf die Halte- und Justagevorrichtung 9 und an auf die Zwischenwand (7b) übertragen wird; alternative Möglichkeiten des Wärmetransportes sind natürlich auch möglich.

Am rechten Ende des Winkels in Figur 2 befindet sich eine angeschraubte Platte 12, welche auch als Endwand eines aus einem Stück gefertigtem Winkelkörpers wie die Wände (7a) und (7b) ausgeführt sein kann. An diese Wand ist eine Halte- und Justagevorrichtung 16 angebracht, welche den Laserspiegel 11 trägt und eine Verkippung desselben sowie Verschiebung senkrecht zur Strahlachse in zwei Richtungen ermöglicht. Am linken Ende des Winkels ist ebenso eine Platte (4) angebracht, welche ebenfalls eine feste Wand des Winkels sein kann, an welcher über eine Halte- und Justagevorrichtung 14 eine Linse (3) zur Fokussierung der Pumplichstrahlung angebracht ist. Diese Linse (3) befindet sich in einer Hülse 2, welche einseitig ein Schraubgewinde zur Aufnahme eines Lichtleiters aufweist, über welchen die Pumplichstrahlung an den Laserkristall angekoppelt wird. Die dem Laserspiegel (11) abgewandte Seite des Laserkristalles (6) trägt eine optische Beschichtung (17), welche als zweiter Laserspiegel dient und gleichzeitig das Pumplicht transmittieren lässt. Beide Spiegel (17) und (11) sind vorzugsweise hochreflektierend für die Grundwellenlänge ausgeführt, Spiegel (11) zudem hochtransmittierend für die frequenzverdoppelte Laserstrahlung. Die Beschichtung (17) ist weiterhin hochtransmittierend für die Pumplichtstrahlung und transmittierend oder aber reflektierend für die frequenzverdoppelte Laserstrahlung.

Im Winkel (1) sind Öffnungen (13a), (13b), ... vorgesehen, welche die Durchführung elektrische Kontakte beispielsweise für das Peltierelement (10) oder für Temperatursensoren, die mit dem Frequenzverdoppler oder dem Laserkristall in Verbindung stehen, ermöglichen.

Der Winkel kann, wie in Figur 2 angedeutet, durch eine Staubschutzhaube (18) abgedichtet werden, so dass kein Staub in das innere des Resonators eindringen kann. Die Staubschutzhaube (18) kann hierbei an den Kontaktflächen zum Winkel (1) entweder mit Dichtlippen versehen oder entsprechend gebogen sein, um einen optimalen Staubschutz zu gewährleisten. Um eine Justage der Resonatorelemente auch bei geschlossener Staubschutzhaube zu ermöglichen, könne in diese Öffnungen (18a), (18b), (18c) ... eingebracht sein, welche den jeweiligen Justierschrauben der Haltevorrichtungen (4), (9) oder (16) korrespondieren und die Einführung eines Justierwerkzeuges erlauben. Nach beendeter Justage werden diese Öffnungen durch Aufkleber, Stöpsel o.ä. verschlossen.

Der den Resonator tragende Winkel (1) wird unterseitig so bearbeitet, dass er auf genau drei kleinen Flächen oder Punkten auf einer ebenen Fläche aufliegt, so dass bei einer Befestigung auf einer Platte o.ä. keine Verspannung des Winkels auftritt.

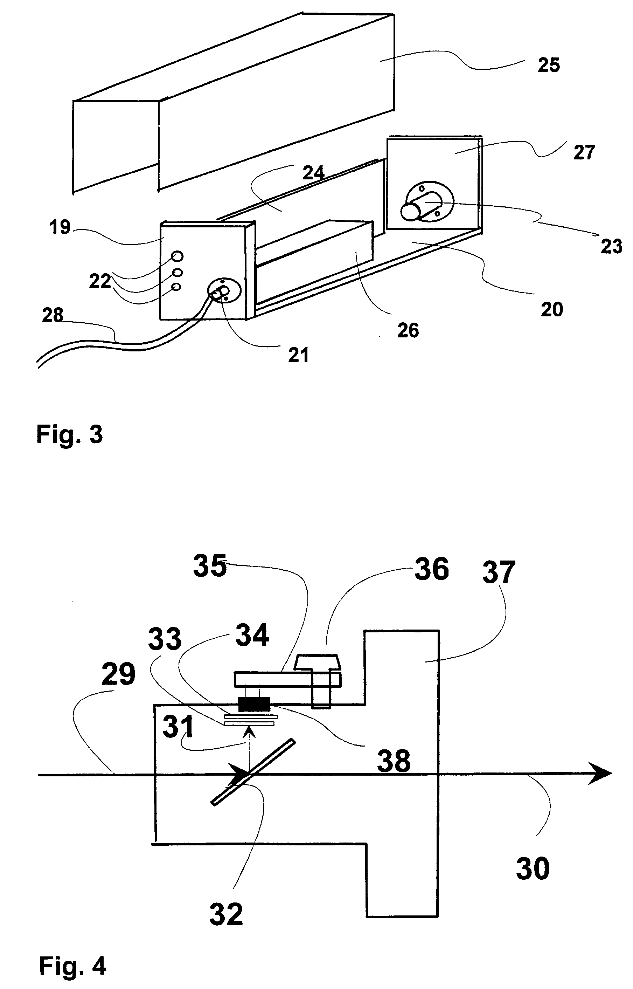

Diese so aufgebaute und staubgesicherte Resonatorstruktur (26) wird, wie in Figur 3 skizziert, in ein Übergehäuse eingebracht, in welchem zusätzlich zum Resonator (26) auch weitere für den Laser erforderliche Elemente wie Elektronikplatinen (24), Strahldiagnoseeinrichtungen (23) (bspw. zur Messung der Laserleistung oder des Laserrauschens) angeordnet sind. Das Übergehäuse besteht aus einer Bodenplatte (20), einer Frontplatte (27), einer Rückplatte (19) sowie einem Deckel (25). Alle Teile des Gehäuses sind vorzugsweise aus leitfähigem Material zu fertigen (bspw. Aluminium), so dass für den Laser und die Elektronik eine gute Abschirmung gegenüber elektromagnetischer Einstrahlung gegeben ist. In der Vorder- oder Rückwand können elektrische Anschlüsse (22) für die Elektronikplatine vorgesehen sein. Weiter ist ein Lichtleiter (28) durch eine der Wände des Gehäuses durchgeführt, der an die Buchse (2) angeschlossen ist. Um den Lichtleiter vor einer Demontage von aussen zu schützen und eine feste, von aussen nicht lösbare Verbindung mit dem Laser zu gewährleisten, ist eine Buchse (21) über das Ende des Lichtleiters geführt und fest mit dem Gehäuse (bsp. Rückplatte (19)) verschraubt, so dass die Schraubverbindung des Lichtleiters selbst von aussen nicht zugänglich ist.

In vielen Fällen ist es notwendig, einen Teil der Laserstrahlung über eine Photodiode einer Elektronikplatine zur Leistungsstabilisierung, Rauschregelung o.ä. zuzuführen. Hierzu wird in der beschriebenen Anordnung die Strahldiagnoseeinrichtung (23) wie in Figur 4 beschrieben aufgebaut:

Der aus dem Resonator (26) austretende Laserstrahl trifft auf eine Strahlteilerplatte (32), welche so beschichtet ist, dass ein Teil (31) des Strahles reflektiert wird, der überwiegende Teil (30) aber die Strahlteilerplatte durchtritt. Die Beschichtung ist dabei so ausgelegt, dass je nach Lage der Polarisation der Laserstrahlung durch Drehung der Platte der Reflexionsgrad variiert werden kann. Der ausgekoppelte Strahl (31) trifft zunächst auf ein Filter (33), welches die Laserstrahlung von anderer Strahlung durch Wellenlängenselektion trennt (dielektrisches Filter und/oder Absorptionsfilter). Daraufhin trifft der Strahl auf eine Platte oder Folie (34), welche als Streuscheibe dient. Diese ist vorzüglich aus Keramik oder Teflon, was eine besonders gute Streuung des Strahles bewirkt. Die Streuung ist notwendig, um Inhomogenitäten im Strahl (31) zu Verschmieren und gleichzeitig Intensitätsschwankungen aufgrund kohärenter Effekte (Speckles) zu vermindern, so dass keine künstlichen Fluktuationen am Ort der Photodiode (38) entstehen. Die Photodiode ist beispielsweise an einer Platine (35) befestigt, welche mit der Strahldiagnoseeinrichtung über eine Halteschraube (36) verbunden ist. Über die Platine und einem Kabel erfolgt die elektrische Kontaktierung zu Elektronikplatine (24).

Die Strahldiagnoseeinheit (23) ist zur genauen Einstellung eines definierten Pegels an der Photodiode (38) an der Frontplatte (27) sowohl drehbare (wegen der polarisationsabhängigen Reflexion der Strahlteilerplatte (33)) als auch in zwei Achsen senkrecht zur Strahlachse verschiebbar angeordnet.

Zusätzlich zu den beschriebenen Elementen könne in dem aus (25), (20), (27) und (19) bestehenden Gehäuse noch weitere Elemente angebracht werden, sei es im oder ausserhalb des Strahlenganges. Vorteilhaft ist beispielsweise (wie in Figur 3 aus Gründen der Übersichtlichkeit nicht mehr eingezeichnet) die Anbringung einer Linse oder einer Linsenanordnung im Laserstrahl (29) oder (30) zur Aufweitung oder Fokussierung des Laserstrahles, welche gegebenenfalls senkrecht zur optischen Achse in zwei Richtungen verschoben werden kann, um eine Korrektur der Strahlausrichtung zum Gehäuse zu erlauben, und/oder einer Planplatte, welche eine Korrektur der Strahlhöhe und des Seitenversatzes bei Drehung um zwei Achsen senkrecht zur optischen Achse ermöglicht. Beide Funktionen, Seitenversatzkorrektur und Strahlausrichtung, kann auch durch eine im Strahl (29) oder (30) befindlichen Keilplatte erfolgen, welche sowohl um zwei Richtungen senkrecht zur optischen Achse verschiebbar als auch drehbar ist.

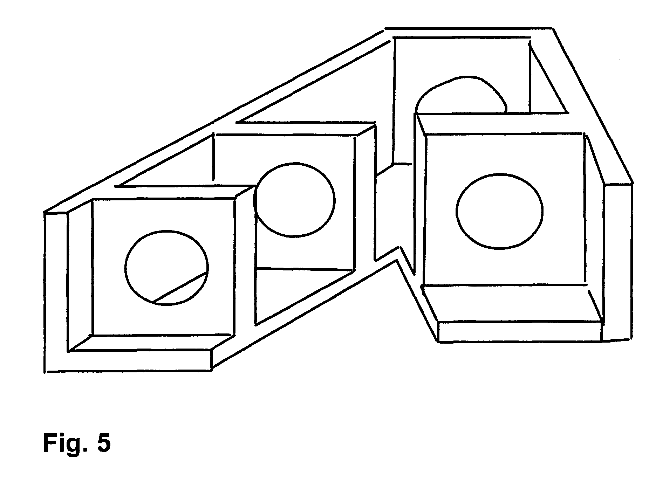

Abschliessend ist anzumerken, dass, wie eingangs erwähnt, neben den in den Zeichnungen dargestellten Winkeln auch U-Profile verwendet werden können. Weiter ist zu vermerken, das die Winkel oder U-Profile nicht nur in linearer Anordnung verwendet werden können. Bei Resonatorstrukturen, die eine nichtlineare, beispielsweise zweidimensionale Anordnung (beispielsweise V- oder Z-Anordnung) aufweisen, ist diese Konstruktion ebenfalls anwendbar. Beispielhaft ist in Figur 5 eine Anordnung für einen V-Resonator skizziert.

## Patentansprüche

1. Diodengepumpter, frequenzverdoppelter Festkörperlaser, wobei alle Elemente des Resonators, z.B. Spiegel (11), sowie resonatorinterne Elemente, z.B. Laserkristall (6), Frequenzverdoppler (8), in oder an einem Winkel- oder U-Profil (1) aufgenommen sind, welches als massives Teil aus spannungsarmen Material aus einem ganzen Stück gefräst oder als Guss-, Press- oder Sinterteil aus Metall oder Keramik spannungsfrei in einem stück hergestellt ist und dass dieses Profil eine oder mehrere Zwischenwände (7a, 7b) aufweist, welche aus dem gleichen Stücke, also ohne Verbindungsstelle durch Schrauben oder ähnlichem, sind wie das Winkel- beziehungsweise das U-Profil, die dem Profil zusätzliche Stabilität geben und dass an oder in demselben alle Elemente des Resonators sowie resonatorinterne Elemente aufgenommen sind, und dass die Zwischenwände Durchbrüche (15) zum Durchlass der Lasermode und/oder der Laserstrahlung aufweisen.

2. Diodengepumpter, frequenzverdoppelter Festkörperlaser nach Anspruch 1, **dadurch gekennzeichnet, dass** ein Festkörper-Laserkristall (6) in einer Buchse (5) beispielsweise aus Aluminium, Kupfer, Stahl oder Keramik aufgenommen wird, welche in eine Öffnung eines der Zwischenwände des Winkels oder U-Profiles aufgenommen wird, wobei das Material der Buchse bezüglich seiner Wärmeleitungseigenschaft so gewählt ist, dass der Laserkristall bei optischer Anregung mit Pumplicht eine für den Betrieb günstige Temperatur einnimmt.

3. Diodengepumpter Festkörperlaser nach Anspruch 2,
**dadurch gekennzeichnet, dass** die Temperatur des Laserkristalles so gewählt ist, dass die durch den radialen Temperaturgradienten hervorgerufen thermische Linse einen Fokussierung der Resonatormode am Ort eines Frequenzverdoppler (8) hervorruft.

4. Diodengepumpter Festkörperlaser nach Anspruch 3,
**dadurch gekennzeichnet, dass** der Laserkristall auf der dem Frequenzverdoppler abgewandten Seite eine optische Beschichtung (17) aufweist, welche als Laserspiegel fungiert.

5. Diodengepumpter Festkörperlaser nach einem oder mehreren der Ansprüche, 3 oder 4 **dadurch gekennzeichnet, dass** der Frequenzverdoppler in einer Halterung (9) aufgenommen wird, welche die Justage des Kristalles in den zwei senkrecht zum Strahlverlauf des Lasers stehenden lateralen Richtungen sowie eine Verkippung um jeweils dies Achsen und eine Drehung um die Strahlachse ermöglicht und mittels dieser Halterung fest mit einer Zwischenwand (7b) des Winkel- oder U-Profiles des Resonators verbunden ist.

6. Diodengepumpter Festkörperlaser nach einem oder mehreren der Ansprüche 3-5 **dadurch gekennzeichnet, dass** der Frequenzverdoppler (8) mittels eines Peltierelementes (10) temperaturgeregelt und/oder - stabilisiert werden kann.

7. Diodengepumpter Festkörperlaser nach einem oder mehreren der vorhergehenden Ansprüche, **dadurch gekennzeichnet, dass** ein Auskoppelspiegel (11) des Lasers in einer Halterung (16) aufgenommen ist, welche sich in den zwei zur Strahlachse senkrechten Richtungen verschieben und um dieses Achsen verkippen lässt und über diese Halterung mit einer Zwischenwand oder aber über eine Halteplatte (21) mit einer Endfläche des Winkel- oder U-Profiles verbunden ist.

8. Diodengepumpter Festkörperlaser nach einem oder mehreren der vorhergehenden Ansprüche, **dadurch gekennzeichnet, dass** das den Resonator tragende Winkel- oder U-Profil (1) auf seiner Unterseite so bearbeitet ist, dass es lediglich an drei Stellen auf einer ebenen Fläche zur Auflage kommt.

9. Diodengepumpter Festkörperlaser nach einem oder mehreren der vorhergehenden Ansprüche, **dadurch gekennzeichnet, dass** das Winkel- oder U-Profil (1) mit einer Haube (18) versehen ist, welche das Profil mit den jeweiligen Halterungen für die optischen Elemente so abschliesst, dass kein Staub in den so eingeschlossenen Resonator-Innenraum eindringen kann, wobei die Haube mit Biegungen oder Dichtlippen an den jeweiligen Grenzflächen zur besseren Abdichtung versehen sein kann.

10. Diodengepumpter Festkörperlaser nach Anspruch 9, **dadurch gekennzeichnet, dass** die Haube mit Bohrungen (18a, 18b, 18c,...) versehen ist, die das Einführen eines geeigneten Werkzeuges zur Änderung der Position der optischen Elemente mittels der Justagevorrichtungen ermöglicht, wobei diese Bohrungen für den Normalbetrieb mit entsprechenden Abdeckungen, z.B Stöpsel, Aufkleber o.ä., verschlossen sind.

11. Diodengepumpter Festkörperlaser nach einem oder mehreren der vorhergehenden Ansprüche, **dadurch gekennzeichnet, dass** die aus dem Winkeloder U-Profil mit allen Justier- und Haltevorrichtungen und optischen Elementen sowie der Staubschutzhaube bestehenden Resonatorstruktur (26) als Subchassis in ein grösseres Gehäuse (19, 20, 25, 27) geschraubt oder anderweitig verbunden ist, welches ein abgeschlossenes Übergehäuse darstellt und zusätzlich zur Resonatorstruktur weitere Elemente des Lasersystemes, wie etwa Elektronikplatine(n) (24) zur Regelung und Steuerung des Lasers sowie Elemente (23) zur Diagnostik der Laserstrahlung aufnimmt.

12. Diodengepumpter Festkörperlaser nach Anspruch 11,
**dadurch gekennzeichnet, dass** das äussere Gehäuse des Lasers aus einem leitfähigen Material besteht, z.B. Aluminium o.ä., so dass für den Laser und die Elektronikelemente im Laser eine gute Abschirmung gegen äussere elektromagnetische Einstrahlungen gegeben ist.

13. Diodengepumpter Festkörperlaser nach einem oder mehreren der Ansprüche 11 oder 12, **dadurch gekennzeichnet, dass** im Winkel- oder U-Profil (1) Durchbrüche (13a, 13b,...) eingearbeitet sind, über welche elektrische Elemente wie beispielsweise Peltier-Elemente zur Temperatursteuerung oder Temperatursensoren mit der im Lasergehäuse befindlichen Elektronikeinheit verbunden werden.

14. Diodengepumpter Festkörperlaser nach einem oder mehreren der Ansprüche 11-13, **dadurch gekennzeichnet, dass** ein Teil der Laserstrahlung (29) über mindestens eine Strahlteilerplatte (32) auf eine Photodiode (38) gebracht wird, welche mit der im Gehäuse befindlichen Elektronikeinheit (24) verbunden ist und somit die Detektion der Leistung, der Leistungsschwankungen und des Amplitudenrauschens ermöglicht.

15. Diodengepumpter Festkörperlaser nach Anspruch 14, **dadurch gekennzeichnet, dass** die Photodiode (38) eine Bandbreite von mindestens 1 MHz hat.

16. Diodengepumpter Festkörperlaser nach Anspruch 14, **dadurch gekennzeichnet, dass** die Strahlteilerplatte (32) so beschichtet ist, dass die Reflexion polarisationsabhängig ist und somit je nach Winkel zur Polarisation der Laserstrahlung der Anteil des ausgekoppelten Lichtes eingestellt werden kann.

17. Diodengepumpter Festkörperlaser nach einem oder mehreren der Ansprüche 14-16, **dadurch gekennzeichnet, dass** eine Strahldiagnoseeinheit (23) in den zwei Richtungen senkrecht zur optischen Achse verschiebbar angebracht ist, so dass sie im Laserstrahl justiert werden kann, und zusätzlich drehbar angebracht, dass durch Drehung der in ihr befindlichen Strahlteilerplatte der Anteil des ausgekoppelten Lichtes eingestellt werden kann.

18. Diodengepumpter Festkörperlaser nach einem oder mehreren der Ansprüche 14-17, **dadurch gekennzeichnet, dass** vor der Photodiode (38) Filter (33) zur Selektion der Laserstrahlung von sonstiger Lichtstrahlung angebracht sind und zusätzlich mindestens eine Streuscheibe (34) aus diffusem Material, z.B. Keramikfolie, Teflonfolie o.ä., welche die Lichtstrahlung abschwächt und durch Streuung eine Verschmierung der Intensitätsverteilung über den Strahlquerschnitt hervorruft, so dass kleine Schwankungen im räumlichen Strahlprofil wie auch auftretende Intensitätsschwankungen aufgrund kohärenter Effekte das Photodiodensignal nicht verfälschen.

19. Diodengepumpter Festkörperlaser nach einem oder mehreren der Ansprüche 11-18, **dadurch gekennzeichnet, dass** strahlaustrittsseitig am Winkel- oder U-Profil des Resonators oder an der Austrittsseite des Laser-Subchassis oder des umgebenden Lasergehäuses eine Vorrichtung zur Aufnahme von Optikelementen angebracht ist.

20. Diodengepumpter Festkörperlaser nach einem oder mehreren der Ansprüche 11-19, **dadurch gekennzeichnet, dass** im austretenden Laserstrahl eine Linse zur Aufweitung oder Fokussierung des Laserstrahles und/oder zur Veränderung des Austrittswinkels der Laserstrahlung in Relation zu den Gehäusewänden eine senkrecht zur Strahlachse in zwei Richtungen justierbare Linse oder Linsenanordnung angebracht ist.

21. Diodengepumpter Festkörperlaser nach einem oder mehreren der Ansprüche 11-20, **dadurch gekennzeichnet, dass** im austretenden Laserstrahl zur Korrektur der Strahlhöhe und des Seitenversatzes des Laserstrahles in Bezug auf die Gehäusewände eine Planplatte eingebracht ist, welche um die zwei senkrecht zur Strahlachse stehenden Achsen gekippt werden kann.

22. Diodengepumpter Festkörperlaser nach einem oder mehreren der vorhergehenden Ansprüche, **dadurch gekennzeichnet, dass** zur Korrektur sowie des Austrittswinkels als auch der Strahllage der Laserstrahlung im austretenden Laserstrahl eine Keilplatte eingebracht ist, welche sowohl um zwei Achsen senkrecht zur Strahlachse gekippt wie auch um zwei Achsen senkrecht zur Strahlachse verschoben werden kann.

23. Diodengepumpter Festkörperlaser nach einem oder mehreren der vorhergehenden Ansprüche, **dadurch gekennzeichnet, dass** zur optischen Anregung des Laserkristalles Pumplicht einer Laserdiode über einen Lichtleiter (28) an den Laserkristall herangeführt und die aus diesem Lichtleiter austretende Strahlung über eine Linse (3) in den Laserkristall fokussiert wird, wobei der Lichtleiter über eine Schraubvorrichtung mit der Resonatoreinheit verbunden ist und welche über eine darüberliegend angebrachte, fest mit dem Lasergehäuse verschraubte Buchse (21) gesichert wird, so dass von aussen ohne Entfernung der Buchse (21) ein Lösen des Lichtleiters unmöglich und der Lichtleiter somit fest mit dem Laser verbunden ist.

24. Diodengepumpter Festkörperlaser nach Anspruch 23,
**dadurch gekennzeichnet, dass** die Linse (3) zur Fokussierung der Pumplichtstrahlung über eine geeignet Justagevorrichtung (14) sowohl in zwei Richtungen senkrecht zur Strahlachse verschoben werden kann sowie um zwei Achsen senkrecht zur Strahlachse verkippt werden kann, wobei eine zusätzliche Justage der Verschiebung in Richtung der Strahlachse möglich ist.

25. Diodengepumpter Festkörperlaser nach Anspruch 24, **dadurch gekennzeichnet, dass** die Lichtleitfaser (28) fest mit einer weiteren Buchse (2) verschraubt wird, welche die Linse (3) hält und somit zusammen mit der Linse verschoben und verkippt wird.

26. Diodengepumpter Festkörperlaser nach Anspruch 25, **dadurch gekennzeichnet, dass** die weitere Buchse (2) zusammen mit der Linse (3) und dem Lichtleiter (28) über eine Justiervorrichtung (14) mit einer Halteplatte oder weiteren Zwischenwand (4) des Winkels oder U-Profiles (1) fest mit dem Winkel- oder U-Profil (1) verbunden ist.

## Claims

1. A diode-pumped, frequency-doubled solid-state laser, whereby all elements of the resonator (such as a mirror (11)) and resonator-internal elements (such as a laser crystal (6), or frequency doubler (8)) are in an angled or U-shaped part (1) that is milled as a solid part from an entire piece of a low-stress material or created as a cast, pressed or sintered single unit of stress-free metal or ceramic, and that this part has one or more intermediate walls (7a, 7b) that are from the same piece (i.e., without sites connected with screws, etc.) as the angled or U-shaped part that give the part additional stability, and that all the resonator elements and the resonator-internal elements are on or in the same part, and that the intermediate walls have penetrations (15) to let pass the laser mode and/or laser beam.

2. A diode-pumped, frequency-doubled solid-state laser according to claim 1, **characterised in that** a solid-state laser crystal (6) is in a sleeve (5) e.g. made of aluminium, copper, steel or ceramic that is in an opening in one of the intermediate walls of the angled or U-shaped part, whereby the heat conductance of the sleeve material is such that the laser crystal assumes a favourable operating temperature when the crystal is optically excited with pump light.

3. A diode-pumped, solid-state laser according to claim 2, **characterised in that** the temperature of the laser crystal is such that the thermal lens generated by the radial temperature gradient focuses the resonator mode at the location of a frequency doubler (8).

4. A diode-pumped, solid-state laser according to claim 3, **characterised in that** the laser crystal has an optical coating (17) on the side facing away from the frequency doubler that functions as a laser mirror.

5. A diode-pumped, solid-state laser according to one or more of claims 3 or 4, **characterised in that** the frequency doubler is in a holder (9) that allows the crystal to be adjusted in the two lateral directions perpendicular to the laser beam path, and allows the crystal to be tipped on these axes and rotated on the beam axis, and the frequency doubler is firmly connected to an intermediate wall (7b) of the angled or U-shaped part of the resonator by means of this holder.

6. A diode-pumped, solid-state laser according to one or more of claims 3-5, **characterised in that** the temperature of the frequency-doubler (8) can be controlled and/or stabilised with a Peltier element (10).

7. A diode-pumped, solid-state laser according to one or more of the prior claims, **characterised in that** an output reflector (11) of the laser is in a holder (16) that can be shifted in the two directions perpendicular to the beam axis and can be tipped on this axis, and it is connected via this holder to an intermediate wall or to a holding plate (21) with an end face of the angled or U-shaped part.

8. A diode-pumped, solid-state laser according to one or more of the prior claims, **characterised in that** the bottom of the angled or U-shaped part (1) bearing the resonator is manufactured such that it rests on a flat surface at only three points.

9. A diode-pumped, solid-state laser according to one or more of the prior claims, **characterised in that** the angled or U-shaped part (1) has a cover (18) that seals the part with the holders for the optical elements so that no dust can penetrate into the enclosed resonator interior, whereby the cover can be bent or have sealing lips on the respective interfaces to provide a better seal.

10. A diode-pumped, solid-state laser according to claim 9, **characterised in that** the cover has holes (18a, 18b, 18c, ...) that allow a suitable tool to be introduced to change the position of the optical elements using adjusting devices, whereby the holes are sealed during normal operation with corresponding covers (such as plugs, stickers, etc.).

11. A diode-pumped, solid-state laser according to one or more of the prior claims, **characterised in that** the resonator structure (26) consisting of the angled or U-shaped part with all the adjusting devices and holders and optical elements and protective dust cover is a subchassis screwed or otherwise connected to a larger housing (19, 20, 25, 27) that is a sealed covering housing that, in addition to the resonator structure, holds other elements of the laser system such as electronics board(s) (24) to control the laser, and elements (23) for diagnosing the laser beam.

12. A diode-pumped, solid-state laser according to claim 11, **characterised in that** the outer laser housing consists of a conductive material such as aluminium, etc. to provide screening for the laser and electronics elements against external electromagnetic radiation.

13. A diode-pumped, solid-state laser according to one or more of claims 11 or 12, **characterised in that** there are penetrations (13a, 13b...) in the angled or U-shaped part (1) by means of which electrical elements such as Peltier elements to control the temperature or temperature detectors can be connected to the electronics unit in the laser housing.

14. A diode-pumped, solid-state laser according to one or more of claims 11-13, **characterised in that** a part of the laser beam (29) is sent via at least one beam splitter plate (32) to a photodiode (38) that is connected to the electronics unit (24) in the housing to detect the output, output fluctuations and amplitude noise.

15. A diode-pumped, solid-state laser according to claim 14, **characterised in that** the photodiode (38) has a bandwidth of at least 1 MHz.

16. A diode-pumped, solid-state laser according to claim 14, **characterised in that** the beam splitter plate (32) is coated so that the reflection depends on polarisation, and the portion of outcoupled light can be adjusted depending on the angle to the polarisation of the laser beam.

17. A diode-pumped, solid-state laser according to one or more of claims 14-16, **characterised in that** a beam diagnosing unit (23) is affixed that can shift in two directions perpendicular to the optical axis so that it can be adjusted in the laser beam, and it can rotate so that the portion of outcoupled light can be adjusted by rotating the beam splitter plate.

18. A diode-pumped, solid-state laser according to one or more of claims 14-17, **characterised in that** filters (33) for selecting the laser beam from other light radiation are in front of the photodiode (38), as well as at least one diffusing screen (34) made of a diffuse material (such as a ceramic film, Teflon film, etc.) that attenuates the light beam and blurs the intensity distribution over the beam cross-section by scattering so that small fluctuations in the spatial beam profile and intensity fluctuations from coherent effects do not distort the photodiode signal.

19. A diode-pumped, solid-state laser according to one or more of claims 11-18, **characterised in that** there is a device to receive optical elements affixed at the beam exit side to the angled or U-shaped part of the resonator or to the exit side of the laser subchassis or the surrounding laser housing.

20. A diode-pumped, solid-state laser according to one or more of claims 11-19, **characterised in that** a lens or lens arrangement that can be adjusted in two directions perpendicular to the beam axis is placed in the exiting laser beam to expand or focus the laser beam and/or change the exit angle of the laser beam in relation to the housing walls.

21. A diode-pumped, solid-state laser according to one or more of claims 11-20, **characterised in that** there is a plane plate in the exiting laser beam for correcting the beam height and the lateral offset of the laser beam in reference to the housing walls, and the plane plate can be tipped on the two axes perpendicular to the beam axis.

22. A diode-pumped, solid-state laser according to one or more of the prior claims, **characterised in that** a wedge plate is placed in the exiting laser beam to correct the exit angle and the beam position of the laser beam that can be tipped on two axes perpendicular to the beam axis or shifted on two axes perpendicular to the beam axis.

23. A diode-pumped, solid-state laser according to one or more of the prior claims, **characterised in that** pump light from a laser diode is guided to the laser crystal via a light guide (28) to optically excite the laser crystal, and the beam leaving the light guide is focused by a lens (3) in the laser crystal, whereby the light guide is connected via a screw connection to the resonator unit and is firmly secured to the laser housing via a sleeve (21) that is screwed on top so that the light guide cannot be released from the outside without removing the sleeve (21), and the light guide is accordingly firmly attached to the laser.

24. A diode-pumped, solid-state laser according to claim 23, **characterised in that** the lens (3) can be shifted via a suitable adjusting device (14) in two directions perpendicular to the beam axis or tipped on two axes perpendicular to the beam axis to focus the pump light beam, whereby the lens can also be shifted along the beam axis.

25. A diode-pumped, solid-state laser according to claim 24, **characterised in that the** light conducting fibre (28) is firmly screwed to another sleeve (2) that holds the lens (3) and hence can be shifted and tipped with the lens.

26. A diode-pumped, solid-state laser according to claim 25, **characterised in that** the other sleeve (2) is firmly connected to the angled or U-shaped part (1) together with the lens (3) and the light guide (28) via an adjusting device (14) with a holding plate or additional intermediate wall (4) of the angled or U-shaped part (1).

## Revendications

1. Laser solide à doubleur de fréquence et pompage à diode selon lequel, tous les éléments du résonateur par exemple le miroir (11) ainsi que les éléments internes au résonateur par exemple le cristal (6) du laser, le doubleur de fréquence (8), sont logés dans un profilé en cornière ou en U (1) qui est une pièce massive en matière à faibles tensions, fraisée dans une pièce ou réalisée comme pièce de fonderie, ou par frittage en métal ou en céramique, sans tension, en un seul morceau et ce profil comporte une ou plusieurs cloisons (7a, 7b) réalisées dans la même pièce, c'est-à-dire sans point de liaison par des vis ou des moyens analogues, comme un profil en cornière ou en U donnant une solidité supplémentaire au profil et sur ou dans celui-ci, sont logés tous les éléments du résonateur ainsi que les éléments internes du résonateur et les cloisons comportent les passages (15) pour le passage du mode laser et/ou le rayonnement laser.

2. Laser solide à doubleur de fréquence et pompage à diode selon la revendication 1,
**caractérisé en ce qu'**
un cristal de laser, solide (6) est logé dans une douille (5) par exemple en aluminium, cuivre, acier ou céramique, placée dans une ouverture de l'une des cloisons de la cornière ou du profil en U, la matière du manchon étant choisie pour ses propriétés de conductivité thermique pour que le cristal du laser sous l'effet d'une excitation optique avec la lumière de pompage, prenne une température avantageuse pour le fonctionnement.

3. Laser solide à doubleur de fréquence et pompage à diode selon la revendication 2,
**caractérisé en ce que**
la température du cristal du laser est choisie pour que la lentille thermique engendrée par les gradients de température radiaux, produisent une focalisation du mode du résonateur à l'endroit d'un doubleur de fréquence (8).

4. Laser solide à pompage par diode selon la revendication 3,
**caractérisé en ce que**
le cristal du laser comporte sur le côté non tourné vers le doubleur de fréquence, un revêtement optique (17) fonctionnant comme miroir laser.

5. Laser solide à pompage par diode selon l'une ou plusieurs des revendications 3 ou 4,
**caractérisé en ce que**
le doubleur de fréquence est logé dans un support (9) permettant l'ajustage du cristal dans deux directions perpendiculaires au tracé du faisceau du laser ainsi qu'un basculement autour de chacun de ces axes et une rotation autour de l'axe du laser, et par ce moyen de fixation, il est relié solidairement à une cloison (7) du profil en cornière ou en U du résonateur.

6. Laser solide à pompage par diode selon une ou plusieurs des revendications 3 à 5,
**caractérisé en ce que**
le doubleur de fréquence (8) est régulé en température et/ou stabilisé à l'aide d'un élément à effet Peltier (10).

7. Laser solide à pompage par diode selon l'une ou plusieurs des revendications précédentes,
**caractérisé en ce qu'**
un miroir de découplage (11) du laser est monté dans une fixation (16) qui peut coulisser dans deux directions perpendiculaires à l'axe du faisceau et se basculer autour de ces axes et par cette fixation, il est relié à une cloison intermédiaire ou à une surface d'extrémité du profil en cornière ou en U mais alors par l'intermédiaire d'une plaque de fixation (21).

8. Laser solide à pompage à diode selon l'une ou plusieurs des revendications précédentes,
**caractérisé en ce que**
le profil en cornière ou en U (1) qui porte le résonateur est usiné sur sa face inférieure pour venir en appui sur une surface plane unique en trois points.

9. Laser solaire à pompage à diode selon l'une ou plusieurs des revendications précédentes,
**caractérisé en ce que**
le profil en cornière ou en U (1) est muni d'un capot (18) qui ferme le profil avec les fixations respectives des éléments optiques pour qu'aucune poussière ne puisse pénétrer à l'intérieur du volume du résonateur ainsi fermé, le couvercle comportant des parties cintrées ou des lèvres d'étanchéité au niveau des surfaces limites respectives pour permettre une meilleure étanchéité.

10. Laser solide à pompe à diode selon la revendication 9,
**caractérisé en ce que**
le couvercle est muni de perçages (18a, 18b, 18c) permettant l'introduction d'un outil approprié pour modifier la position des éléments optiques à l'aide des dispositifs d'ajustage, ces perçages étant fermés par des moyens de recouvrement tels que des bouchons ou des étiquettes collées entre autres pour le fonctionnement normal.

11. Laser solide à pompage à diode selon l'une ou plusieurs des revendications précédentes,
**caractérisé en ce que**
la structure de résonateur (26) formée du profil en cornière ou en U avec tous les dispositifs d'ajustage et de fixation et les éléments optiques ainsi que le couvercle de protection contre la poussière, est reliée par vissage ou par un autre moyen comme sous-châssis dans un boîtier plus grand (19, 20, 25, 27) qui constitue une enceinte fermée et reçoit en plus de la structure de résonateur, d'autres éléments du système laser tels qu'une platine de circuit électronique (24) pour la régulation et la commande du laser ainsi que des éléments (23) de diagnostic du faisceau laser.

12. Laser solide à pompage à diode selon la revendication 11,
**caractérisé en ce que**
le boîtier extérieur du laser est une matière conductrice (par exemple entre autres de l'aluminium) pour avoir une bonne protection contre le rayonnement électromagnétique extérieur pour le laser et les éléments électroniques dans le laser.

13. Laser solide à pompage à diode selon l'une ou plusieurs des revendications 11 ou 12,
**caractérisé en ce que**
le profil en cornière ou en U (1) comporte des passages (13a, 13b), usinés, permettant de relier des éléments électriques comme par exemple des éléments à effet de Peltier pour la commande de la température ou des capteurs de température avec une unité électronique qui se trouve dans le boîtier du laser.

14. Laser solide à pompage à diode selon l'une ou plusieurs des revendications 11 à 13,
**caractérisé en ce qu'**
une partie du faisceau laser (29) est appliquée par au moins une plaque de division de faisceau (32) sur une photodiode (38) reliée à l'unité électronique (24) du boîtier et permettant ainsi la détection de la puissance, des variations de puissance et du bruit d'amplitude.

15. Laser solide à pompage à diode selon la revendication 14,
**caractérisé en ce que**
la photodiode (38) a une largeur de bande d'au moins 1 MHz.

16. Laser solide à pompage à diode selon la revendication 14,
**caractérisé en ce que**
la plaque de diviseur de faisceau (32) est revêtue pour que la réflexion soit dépendante de la polarisation pour permettre ainsi de régler la fraction de lumière découplée suivant l'angle par rapport à la polarisation du faisceau laser.

17. Laser solide à pompage à diode selon l'une ou plusieurs des revendications 14 à 16,
**caractérisé en ce qu'**
une unité de diagnostic de faisceau (23) s'étend de manière coulissante dans deux directions perpendiculairement à l'axe optique pour permettre son ajustage dans le faisceau laser et elle est en plus montée à rotation pour pouvoir régler la fraction de lumière découplée par rotation de la plaque de division de faisceau qu'elle comporte.

18. Laser solide à pompage à diode selon l'une ou plusieurs des revendications 14 à 17,
**caractérisé par**
des filtres (33) pour sélectionner le faisceau laser par rapport à d'autres rayonnements lumineux, ces filtres étant prévus en amont de la photodiode (38) et il est prévu au moins une plaque diffusante (34) en matière de diffusion (par une feuille de matière céramique, une feuille de Téflon ou analogue) qui atténue le rayonnement lumineux et produit par diffraction, un étalement de l'intensité lumineuse dans la section du faisceau, pour que les petites oscillations du profil spatial du faisceau de même que les oscillations d'intensité produites par effet cohérent, ne faussent pas le signal de la photodiode.

19. Laser solide à pompage à diode selon l'une ou plusieurs des revendications 11 à 18,
**caractérisé en ce qu'**
en sortie du faisceau, sur le profil de cornière ou en U du résonateur ou sur le côté de sortie du sous châssis du laser ou du boîtier de laser, enveloppant, il soit prévu un dispositif pour recevoir des éléments optiques.

20. Laser solide à pompage à diode selon l'une ou plusieurs des revendications 11 à 19,
**caractérisé en ce que**
dans le faisceau laser, sortant, il est prévu une lentille pour étaler ou pour focaliser le faisceau laser et/ou une lentille ou un dispositif de lentille ajustable dans deux directions par rapport à l'axe du faisceau est prévu pour modifier l'angle de sortie du faisceau laser par rapport aux parois du boîtier.

21. Laser solide à pompage à diode selon l'une ou plusieurs des revendications 11 1 à 20,
**caractérisé en ce que**
dans le faisceau laser sortant, il est prévu une plaque plane pour corriger la hauteur du faisceau et le décalage latéral de celui-ci par rapport aux parois du boîtier, cette plaque pouvant être basculée autour de deux axes perpendiculaires à l'axe du faisceau.

22. Laser solide à pompage à diode selon l'une ou plusieurs des revendications précédentes,
**caractérisé en ce qu'**
un coin optique est placé dans le faisceau laser sortant pour corriger à la fois l'angle de sortie et la position du faisceau laser, ce coin pouvant être basculé à la fois autour de deux axes perpendiculaires à l'axe du faisceau et il peut également être déplacé autour de deux axes perpendiculaires à l'axe du faisceau.

23. Laser solide à pompage à diode selon l'une ou plusieurs des revendications précédentes,
**caractérisé en ce que**
pour l'excitation optique du cristal du laser, on applique de la lumière de pompage d'une diode laser par l'intermédiaire d'un guide de lumière (28) au cristal du laser et le rayonnement sortant du guide de lumière est focalisé dans le cristal du laser par l'intermédiaire d'une lentille (3), le guide de lumière étant relié à l'unité du résonateur par un dispositif à vis et cette unité est fixée à l'aide d'une douille (21), installée par dessus et vissée solidairement au boîtier du laser pour rendre impossible l'enlèvement du guide de lumière à partir de l'extérieur sans enlever la douille (21) et solidariser ainsi le guide de lumière au laser.

24. Laser solide à pompage à diode selon la revendication 23,
**caractérisé en ce que**
la lentille (3) pour focaliser le faisceau de lumière de pompage est décalée par l'intermédiaire d'un dispositif d'ajustage approprié (14) à la fois dans deux directions perpendiculaires à l'axe du faisceau tout en pouvant être basculée autour de deux axes perpendiculaires à l'axe du faisceau, un ajustage supplémentaire du coulissement étant possible dans la direction de l'axe du faisceau.

25. Laser solide à pompage à diode selon la revendication 24,
**caractérisé en ce que**
la fibre guide de lumière (28) est vissée solidairement à une autre douille (2) qui tient la lentille (3) et peut ainsi être coulissée et basculée avec la lentille.

26. Laser solide à pompe à diode selon la revendication 25,
**caractérisé en ce que**
l'autre douille (2) ainsi que la lentille (3) et le guide de lumière (28) sont reliés par un dispositif d'ajustage (14) à une plaque de fixation ou autre cloison (4) du profil en cornière ou en U (1), solidairement à ce profil (1).
